# EUROPEAN PATENT APPLICATION

(11) **EP 1 962 260 A1**
(43) Date of publication of application: **27.08.2008**
(21) Application number: 06834596.6
(22) Date of filing: 13.12.2006
(51) Int. Cl.: G09F 9/30, C04B 35/44, G02F 1/13, G02F 1/1333, G03B 21/10, G03B 21/14, H04N 5/74

(54) **TRANSPARENT SPINEL SUBSTRATE, TRANSPARENT SUBSTRATE FOR OPTICAL ENGINE, REAR PROJECTION TELEVISION RECEIVER USING THEM AND IMAGE PROJECTOR USING LIQUID CRYSTAL**

(30) Priority: 15.12.2005 JP 2005362166
(71) Applicant: SEI Hybrid Products, Inc., Osaka-shi, Osaka 554-0024 (JP)
(72) Inventor: NAKAYAMA, Shigeru, Osaka-shi, Osaka 554-0024 (JP); FUJII, Akihito, Osaka-shi, Osaka 554-0024 (JP); KINOSHITA, Shigenori, Osaka-shi, Osaka 554-0024 (JP)
(74) Representative: HOFFMANN EITLE
(86) International application number: PCT/JP2006/324841
(87) International publication number: WO 2007/069644

(57) **Abstract**

A transparent substrate for an optical engine of a rear-projection television receiver or a liquid crystal image projector, in particular, for protecting an original image forming panel of the optical engine, the transparent substrate **characterized by** being formed from a transparent highly-thermal-conductive cubic polycrystal plate, exhibiting good transmission of light or the like, good thermal conductivity, and good operability, and a rear-projection television receiver including the transparent substrate. It is favorable that the transparent substrate formed from the transparent highly-thermal-conductive cubic polycrystal and provided with a coating layer on a surface is used. Preferably, the coating layer is a multilayer. It is favorable that the material for the coating is at least two types selected from metal fluorides, metal oxides, and zinc compounds. The optical transparency is improved and the environmental stability is also improved by the coating.

## Description

### Technical Field

The present invention relates to a transparent spinel substrate, a transparent substrate for an optical engine, and a rear-projection television receiver or a liquid crystal image projector including them. In particular, the present invention relates to a transparent substrate for an optical engine including the transparent substrate formed from a transparent highly-thermal-conductive cubic polycrystal, a transparent spinel substrate provided with an antireflection coating for a transparent substrate, and a rear-projection television receiver or a liquid crystal image projector including them.

### Background Art

In recent years, rear-projection television receivers (hereafter, a "television receiver" is abbreviated as a "television"), in which optical on-off elements of transmission type, reflection type, or the like are used for optical engines, have been developed intensively and have become widespread among users because of low price and light weight in addition to good image quality.
The rear-projection television refers to a television of a system in which the image light (a fine light bundle corresponding to picture elements for forming an image) produced by an optical engine is enlarged and projected on a mirror, the image light reflected by the mirror is passed through a Fresnel lens so as to correct distortion and, thereafter, is projected on a screen, so that an image to be appreciated by users visually is displayed.

The optical engine is an apparatus for forming the image light corresponding to picture signals composed of electric signals and furthermore projecting the image light toward a mirror. The optical engine includes a light source, an optical system for alignment of light source shape, a color separation/synthetic optical system (dichroic mirror or the like), a deflector lens, a digital display element on a primary color light (red, blue, green) basis, a cross prism, a projection lens, and the like.
The formation of image light of each primary color in the digital display device is conducted by optical on-off elements, e.g., liquid crystal layers filled in the insides of the small chambers arranged on a substrate to form picture elements, switching on or off the transmitted light (a so-called LCD type) or switching on or off the reflected light (a so-called LCOS type) in accordance with the picture signals (hereafter, a planar portion which is used in the optical engine, which has optical on-off elements, and which forms the image light by switching on or off the light in accordance with the picture signals is referred to as an "original image forming panel").

In recent years, a type in which a mirror, a color filter, and the like are included on a picture element basis and the reflected light is switched on or off in accordance with the picture signals (a so-called DLP type) has also been developed.
However, the rear-projection television, the optical engine, various optical devices, other optical on-off elements, and the original image forming panel are known technologies. Therefore, general explanations of them will not be provided.

Common displays, for example, liquid crystal displays, include some protective layers in uses for the purpose of protecting surfaces from dirt and outside air. In the use for displays of personal computers and the like, even transparent plastic has the effect satisfactorily. In the use for protecting screens of cellular phones, since the strength is required, glass and the like may be used.

The optical engine of the rear-projection television is required to brightly project an image formed by a small digital display device on a large screen regardless of the type of the optical engine being any one of the above-described LCD, LCOS, and DLP. Consequently, regarding the optical on-off element of the original image forming panel of the optical engine of the rear-projection television, the intensity of the light source and the amount of light which passes through the inside are significantly high in contrast to displays of personal computers and the like.

Therefore, it has been proposed that substances, for example, single crystal sapphire (paragraphs 0014, 0016, and 0043 to 0048 of Patent Document 1) and YAG (yttrium aluminum garnet, 3Y₂O₃ ·5Al₂O₃) (Patent Document 2), having thermal conductivity still larger than the thermal conductivity of glass are used.
In the case where single crystal sapphire is used, since the thermal conductivity is 20 to 30 times larger than that of quartz glass, the strength is high, and the hardness is very high, the thickness of a transparent substrate can be decreased. However, sapphire has a high absorption index of electromagnetic waves in an infrared region to exhibit an exothermic property and the refractive-index anisotropy is relatively large. Furthermore, there are disadvantages that working is difficult because the hardness is too high and the price is high.
[Patent Document 1] Japanese Unexamined Patent Application Publication No. 2000-284700
[Patent Document 2] Japanese Unexamined Patent Application Publication No. 2005-70734

### Disclosure of Invention

### Problems to be Solved by the Invention

Consequently, the transparent substrate used for the optical engine of the rear-projection television, in particular the transparent substrate for protecting the original image forming panel of the optical engine, has a purpose of not only protecting the surface of the display portion of the optical on-off element for forming original images from dirt and outside air, but also protecting from the heat of a nearby light source and dissipating the heat generated from the optical on-off element because of absorption of the light from the light source in order to prevent a temperature increase of the optical on-off element. Since the temperature of the transparent substrate itself increases, the heat resistance is required.
Furthermore, the substrate is required not to generate heat on the basis of absorption of light, which is to be transmitted essentially, and infrared rays radiated from the light source together with the light (hereafter referred to as "light and the like" in principle where heat generation is concerned), that is, the substrate material is required to has a high degree of translucency and no heat generation property.

In recent years, user demands for bright screens have become still severer.
Consequently, as for a transparent substrate for an optical engine of a rear-projection television, in particular, a protective substrate used for a surface of a display portion of an optical on-off element for forming an original image of the optical engine, development of a transparent substrate exhibiting excellent heat resistance and excellent optical transparency and having further excellent properties, e.g., a high thermal conductivity to reduce a temperature increase of a liquid crystal, has been desired.

Furthermore, development of a more inexpensive transparent substrate not having complicated properties, e.g., birefringence, in contrast to single crystal sapphire and being easy to assemble because of no need to make the directions of the crystallographic axes agree with each other.

Moreover, development of a still more inexpensive rear-projection television has been desired wherein such a transparent substrate is adopted for the optical engine, the luminance of the light source can be increased and, as a result, a screen is large and bright.

It has been desired that a substrate has a higher degree of translucency and no heat generation property than ever for not only the rear-projection television, but also a protective substrate to be used for a surface of an optical on-off element of a panel for forming an original image of a liquid crystal image projector from not only the viewpoint of displaying clear, fine images as much as possible, but also the viewpoint of reduction of heat generation due to absorption of light and the like, which are to be transmitted essentially.

As for a means for them, it has also been desired to provide a further excellent transparent substrate by developing a new material itself for such a transparent substrate and, in addition, improving the material for the transparent substrate now in practical use.

### Means for Solving the Problems

The present invention has been made to solve the above-described problems and provides a transparent substrate formed from a transparent highly-thermal-conductive cubic polycrystal and serving as a transparent substrate for an optical engine of a rear-projection television, in particular for protecting a surface of an optical on-off element of an original image forming panel thereof.
Furthermore, a transparent substrate formed from a transparent highly-thermal-conductive cubic polycrystal and serving as a transparent substrate for an optical engine of a liquid crystal image projector, in particular for protecting a surface of an optical on-off element of an original image forming panel thereof, is provided.
The transparent highly-thermal-conductive cubic polycrystal used here has a property of smoothly transmitting visible rays and infrared rays. Specifically, the transmittance of light with wavelengths of 400 to 800 nm (0.4 to 0.8 µm) is at least 50% or more regarding the transparent substrate including partition walls of a crystal layer, a semiconductor, and a picture element, and 70% or more, and preferably 85% or more regarding a pure, transparent plate material for the above-described transparent substrate. Furthermore, the thermal conductivity is excellent, and specifically, the thermal conductivity is 10 W/m ·K or more.

Here, in the case where the transparent substrate is used for the original image forming panel, the "transparent substrate" is a concept including not only a film for protecting an optical on-off element portion from mechanical actions, e.g., an external force, and chemical actions, e.g., entrance of air and ultraviolet rays, but also, for example, a substrate serving as a base of an original image forming panel, in which thin-film transistors, liquid crystal chambers, and mirrors for picture elements are formed on the substrate surface in accordance with the arrangement of picture elements, and a substrate also serving as a film, on which a transparent organic conductive layer is formed on the optical on-off element side and which forms a boundary wall thereof (so-called window).
The transparent substrate is not always in the tabular shape. In the case where the transparent substrate is used as a substrate for protecting a concave lens or a convex lens, the shape of curved surfaces corresponding to the shapes of the lenses may be employed. The substrate may be produced into the shape of a curved surface, and may be served as various lenses.

It is favorable that a coating layer for anti-reflection (AR) is disposed on the surface of the above-described substrate formed from a transparent highly-thermal-conductive cubic polycrystal plate. In particular, if the coating is conducted by using a material having a refractive index lower than the refractive index of the transparent highly-thermal-conductive cubic polycrystal, the optical transparency is improved, the heat generation due to absorption of the light is reduced correspondingly, and a rear-projection television with a bright, easy-to-see image is produced.
If the above-described coating layer is a single layer or a multilayer and is a layer in which at least one type of layer selected from metal fluorides and metal oxides is used alone or in combination, a transparent substrate for rear-projection television is produced, the transparent substrate having good adhesion to a substrate formed from a transparent highly-thermal-conductive cubic polycrystal plate and excellent environmental stability.

In particular, it is favorable that the transparent highly-thermal-conductive cubic polycrystal is selected from the group consisting of transparent ZnS, spinel (MgO ·nAl₂O₃; n = 1 to 3), YAG (3Y₂O₃ ·5Al₂O₃), MgO, ALON (5AlN ·9Al₂O₃), Y₂O₃, and diamond. The factors common and essential to them are a cubic system and a polycrystal. As described above, the transmittance of light with wavelengths of 400 to 800 nm is 50% or more and the thermal conductivity is 10 W/m K or more. Therefore, this is an excellent material for the transparent substrate for an optical engine of a rear-projection television.

In particular, in the case where the transparent highly-thermal-conductive cubic polycrystal is spinel, an excellent transparent substrate for a rear-projection television or a liquid crystal image projector is produced by making the coating layer include at least two layers and increasing the light transmittance over an entire range of 400 to 800 nm.

The rear-projection television or the liquid crystal image projector includes the transparent substrate formed from the above-described material. Consequently, absorption of light and the like by the transparent substrate of the optical engine, in particular, the transparent substrate in the window portion and the like of the original image forming panel of the optical engine is very little and, by extension, the heat generation is reduced and the image becomes bright.

The invention related to each Claim will be described below briefly.

The invention according to Claim 1 is
a transparent substrate for an optical engine of a rear-projection television receiver, the transparent substrate characterized by being formed from a transparent highly-thermal-conductive cubic polycrystal plate.

In the invention according to the present Claim, the transparent substrate for an optical engine has good heat resistance and good optical transparency and is formed from a transparent highly-thermal-conductive cubic polycrystal plate having a high thermal conductivity. Therefore, an excellent transparent substrate for an optical engine of a rear-projection television receiver is provided.
Furthermore, the assembly can be conducted without concern for the directions of the crystallographic axes because of the polycrystal.

The invention according to Claim 2 is the above-described transparent substrate for an optical engine of a rear-projection television receiver, and
the transparent substrate for an optical engine of a rear-projection television receiver is characterized in that a coating layer is disposed on the surface.

In the invention according to the present Claim, since the coating layer is disposed on the surface, reflection of the light at the boundary surface is prevented. Therefore, the optical transparency is improved, the heat generation due to absorption of the light is reduced correspondingly, and the screen becomes bright.

The invention according to Claim 3 is the above-described transparent substrate for an optical engine of a rear-projection television receiver, and
the transparent substrate for an optical engine of a rear-projection television receiver is characterized in that the above-described coating layer is a single layer or a multilayer and is a layer in which at least one type of layer selected from metal fluorides and metal oxides is used alone or in combination.

In the invention according to the present Claim, since the coating layer in which at least one type of layer selected from metal fluorides and metal oxides is used alone or in combination is disposed on the surface, the effect of the invention according to Claim 2 is further exerted.

The invention according to Claim 4 is the above-described transparent substrate for an optical engine of a rear-projection television receiver, and
the transparent substrate for an optical engine of a rear-projection television receiver is characterized in that the above-described transparent highly-thermal-conductive cubic polycrystal is selected from the group consisting of transparent ZnS, spinel (MgO nAl₂O₃; n = 1 to 3), YAG (3Y₂O₃ ·5Al₂O₃), MgO, ALON (5AlN ·9Al₂O₃), Y₂O₃, and diamond.

In the invention according to the present Claim, since the above-described transparent highly-thermal-conductive cubic polycrystal is selected from the group consisting of transparent ZnS, spinel (MgO nAl₂O₃; n = 1 to 3), YAG (3Y₂O₃ ·5Al₂O₃), MgO, ALON (5AlN ·9Al₂O₃), Y₂O₃, and diamond, the heat resistance and the optical transparency are good, the thermal conductivity is high, and by extension an excellent transparent substrate for an optical engine of a rear-projection television receiver is provided.

The invention according to Claim 5 is the above-described transparent substrate for an optical engine of a rear-projection television receiver, and the transparent substrate for an optical engine of a rear-projection television receiver is characterized in that the above-described transparent highly-thermal- conductive cubic polycrystal is spinel (MgO nAl₂O₃; n = 1 to 3).

In the invention according to the present Claim, since the transparent substrate is formed from spinel, an excellent transparent substrate for an optical engine of a rear-projection television receiver is provided.
When the molecular formula of spinel is expressed by MgO ·nA₂O₃, n is 1.05 to 1.30, preferably 1.07 to 1.125, and particularly preferably 1.08 to 1.09.

The invention according to Claim 6 is the above-described transparent substrate for an optical engine of a rear-projection television receiver, and
the transparent substrate for an optical engine of a rear-projection television receiver is characterized in that the above-described transparent highly-thermal-conductive cubic polycrystal is YAG (3Y₂O₃ ·5Al₂O₃).

In the invention according to the present Claim, since the transparent substrate is formed from YAG, an excellent transparent substrate for an optical engine of a rear-projection television receiver is provided.

The invention according to Claim 7 is the above-described transparent substrate for an optical engine of a rear-projection television receiver, and
the transparent substrate for an optical engine of a rear-projection television receiver is characterized in that the above-described transparent highly-thermal-conductive cubic polycrystal is MgO.

In the invention according to the present Claim, since the transparent substrate is formed from MgO, an excellent transparent substrate for an optical engine of a rear-projection television receiver is provided.

The invention according to Claim 8 is the above-described transparent substrate for an optical engine of a rear-projection television receiver, and
the transparent substrate for an optical engine of a rear-projection television receiver is characterized in that the above-described transparent highly-thermal-conductive cubic polycrystal is ZnS.

In the invention according to the present Claim, since the transparent substrate is formed from ZnS, an excellent transparent substrate for an optical engine of a rear-projection television receiver is provided.

The invention according to Claim 9 is the above-described transparent substrate for an optical engine of a rear-projection television receiver, and
the transparent substrate for an optical engine of a rear-projection television receiver is characterized by being a substrate of a type including an optical on-off element.

In the invention according to the present Claim, since the substrate is of a type including an optical on-off element, the effect of the invention according to each Claim described above is exerted to the greatest extent.

The invention according to Claim 10 is a rear-projection television receiver characterized by including the transparent substrate for an optical engine of a rear-projection television according to any one of Claim 1 to Claim 9.

In the invention according to the present Claim, since the transparent substrate for an optical engine of a rear-projection television according to any one of Claim 1 to Claim 9 is included, the screen becomes bright and an excellent rear-projection television receiver is provided.

The invention according to Claim 11 is
a transparent spinel substrate including a coating layer on at least one surface, wherein in order to prevent reflection, the above-described coating layer has
a first coating layer disposed on a surface of the above-described spinel and formed from any one of HfO₂, Al₂O₃, Y₂O₃, ZrO₂, TiO₂, Ta₂O₅, La₂O₃, and LaF₃ and
a second coating layer disposed on a surface of the above-described first coating layer and formed from any one of MgF₂, SiO₂, and LaF₃ (limited to the case where the above-described first coating layer is not formed from LaF₃).

In the invention according to the present Claim, since an antireflection coating layer including two coating layers is disposed on at least one surface of the spinel thin plate, in particular the surface on the light source side, the optical transparency is increased over a wide range. Consequently, an excellent transparent substrate for an optical engine of a rear-projection television receiver or an excellent transparent substrate for a liquid crystal image projector is provided.

It is desirable that the antireflection coating layer is composed of at least two layers and the transmittance over the entire range of 400 to 800 nm is improved.
Here, the "transparent substrate" is not limited to the above-described substrates. The transparent substrate may be uneven or bended to some extent or be in the shape of a lens.
Preferably, the thickness is about 0.5 to 1.1 mm depending on uses.

The material for the coating layer includes the case where other substances are contained incidentally.
Furthermore, a phrase "including a second coating layer" includes the case where a coating layer irrelevant to antireflection is disposed for any other purpose.

The invention according to Claim 12 is
a transparent spinel substrate characterized by including a coating layer on at least one surface, wherein in order to prevent reflection, the coating layer has
a first coating layer disposed on a surface of the above-described spinel and formed from any one of HfO₂, Al₂O₃, Y₂O₃, TiO₂, Ta₂O₅, La₂O₃, and LaF₃,
a second coating layer disposed on a surface of the above-described first coating layer and formed from any one of TiO₂, Ta₂O₅, Nb₂O₅, ZnS, ZnSe, ZrO₂, and LaF₃, the material being different from the material for the above-described first coating layer,
a third layer disposed on a surface of the above-described second coating layer and formed from any one of HfO₂, Al₂O₃, Y₂O₃, TiO₂, Ta₂O₅, La₂O₃, and LaF₃, the material being different from the material for the above-described second coating layer, and
a fourth coating layer disposed on a surface of the above-described third coating layer, and formed from any one of MgF₂, SiO₂ and LaF₃, the material being different from the material for the above-described third coating layer.

In the invention according to the present Claim, since the coating layer including four layers is disposed as an antireflection coating layer on at least one surface of the spinel thin plate, in particular the surface on the light source side, the optical transparency is increased over a wider range as compared with the range in the case of the coating layer including two layers. Consequently, an excellent transparent substrate for an optical engine of a rear-projection television receiver or an excellent transparent substrate for a liquid crystal image projector is provided.

As for the coating layer, for example, the first coating layer is formed from HfO₂ having a thickness of 70 nm, the second coating layer is formed from TiO₂ having a thickness of 95 nm, the third coating layer is formed from HfO₂ having a thickness of 40 nm, and the fourth coating layer is formed from MgF₂ having a thickness of 75 nm.

The invention according to Claim 13 is the above-described transparent spinel substrate, and
the above-described spinel thin plate is characterized in that when the molecular formula of spinel is expressed by MgO ·nAl₂O₃, n is 1.08 or more, and 1.09 or less.

In the invention according to the present Claim, since n of spinel (MgO ·nAl₂O₃) is 1.08 or more, and 1.09 or less, the optical transparency, the heat resistance, the thermal conductivity, and the like are excellent.

The invention according to Claim 14 is the above-described transparent spinel substrate,
characterized in that the above-described transparent spinel substrate is used for a rear-projection television receiver or is used for a liquid crystal image projector.

In the invention according to the present Claim, the above-described transparent spinel substrate according to any one of Claim 11 to Claim 13 is applied to a rear-projection television receiver or a liquid crystal image projector. Consequently, an excellent rear-projection television receiver or an excellent liquid crystal image projector can be provided.

The invention according to Claim 15 is
a rear-projection television receiver or a liquid crystal image projector characterized by including the transparent spinel substrate according to any one of Claim 11 to Claim 13.

In the invention according to the present Claim, since the transparent spinel substrate according to any one of Claim 11 to Claim 13 is included and, in particular, the transparent spinel substrate is used for the optical engine, an image becomes bright and a rear-projection television receiver or the liquid crystal image projector having excellent performance is provided.

### Advantages

The transparent substrate, which is formed from a transparent highly-thermal-conductive cubic polycrystal, for an optical engine of a rear-projection television receiver, according to the present invention, is a polycrystal. Therefore, in the assembly, particularly in the assembly of the original image forming panel of the optical engine, the assembly can be conducted without concern for the directions of the crystallographic axes.
Furthermore, since good transmission of light and the like is exhibited, heat generation due to absorption of the light and the like is reduced, and good thermal conductivity is also exhibited. Consequently, the heat generated from the optical on-off element formed from a liquid crystal or the like is dissipated so that an excessive temperature increase can be prevented.
Significant usefulness as the transparent substrate for an optical engine of a rear-projection television or a liquid crystal image projector is expected because of these characteristics.

The luminance of the light source can be increased by adopting such a transparent substrate for the optical engine. As a result, a still inexpensive rear-projection television with a large, bright screen can be provided.

### Brief Description of Drawings

Fig. 1 is a diagram conceptually showing the structure of a liquid crystal projector.
Fig. 2 shows a graph of the optical transparency in a visible light region of a transparent substrate for an original image forming panel of an optical engine of a rear-projection television, according to the present invention.
Fig. 3 shows graphs of the optical transparency in a visible light region of a transparent substrate in Example 2 and that in the case where one coating layer is disposed on this transparent substrate, according to the present invention.
Fig. 4 is a diagram showing a key portion of a transparent substrate in Example 5, in which two antireflection coating layers are disposed, according to the present invention.
Fig. 5 shows a graph of the optical transparency in a visible light region of the transparent substrate in Example 5, in which two antireflection coating layers are disposed, according to the present invention.
Fig. 6 is a diagram showing a key portion of a transparent substrate in Example 6, in which four antireflection coating layers are disposed, according to the present invention.
Fig. 7 shows a graph of the optical transparency in a visible light region of the transparent substrate in Example 6, in which four antireflection coating layers are disposed, according to the present invention.

### Reference Numerals

- 10: spinel thin plate
- 20: Y₂O₃ coating layer
- 25: Y₂O₃ layer coating layer
- 30: ZnS layer coating layer
- 40: MgF₂ layer coating layer
- 50: light source
- 51: reflection mirror
- 53: infrared condenser lens
- 54: ultraviolet cut filter
- 60: polarization conversion integrator
- 61: flyeye lens
- 62: slit
- 63: lens
- 70: dichroic mirror
- 71: mirror
- 80: liquid crystal panel
- 81: polarizing plate
- 82: dust-proof window
- 83: half-wave plate
- 84: cross dichroic prism
- 90: projection lens system

### Best Modes for Carrying Out the Invention

The present invention will be described below with reference to the best modes for carrying out the invention. The present invention is not limited to the following embodiments. Various modifications can be applied to the following embodiments within the scope of the present invention or equivalent thereto.

### (First embodiment)

The present embodiment relates to the material for a transparent substrate.

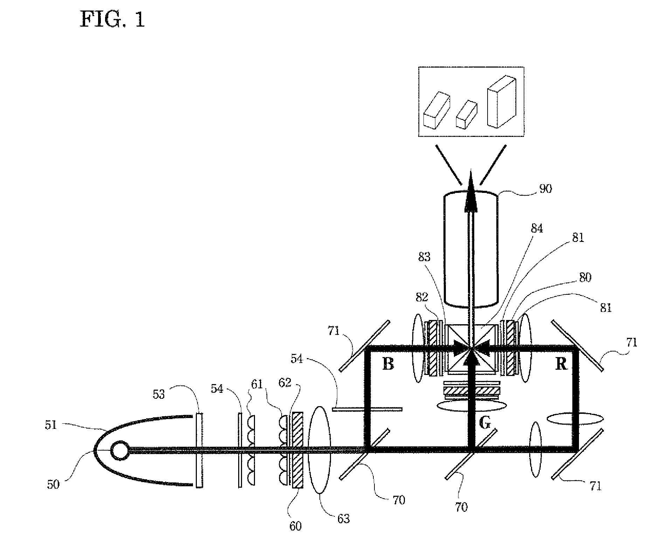

A liquid crystal projector including a transparent substrate according to the present embodiment will be described with reference to Fig. 1. Fig. 1 is a diagram conceptually showing the structure of a liquid crystal projector. In Fig. 1, reference numeral 50 denotes a light source composed of a high-intensity lamp, e.g., a metal halide lamp, a xenon lamp, or UHP, reference numeral 51 denotes a reflection mirror, reference numeral 53 denotes an infrared condenser lens, reference numeral 54 denotes an ultraviolet cut filter, reference numeral 60 denotes a polarization conversion integrator, reference numeral 61 denotes a flyeye lens, reference numeral 62 denotes a slit, reference numeral 63 denotes a lens, reference numeral 70 denotes a dichroic mirror for conducting transmission or reflection in accordance with the wavelength of light, reference numeral 71 denotes a mirror, reference numeral 80 denotes a liquid crystal panel, reference numeral 81 denotes a polarizing plate, reference numeral 82 denotes a dust-proof window, reference numeral 83 denotes a half-wave plate, reference numeral 84 denotes a cross dichroic prism, and reference numeral 90 denotes a projection lens system.

The light from the light source 50 is reflected by the reflection mirror 51 and is condensed by the infrared condenser lens 53. Unnecessary ultraviolet rays are cut by the ultraviolet cut filter 54, and unevenness of intensity is flattened by two flyeye lenses 61. The light is passed through the slit 62 and is lead to the polarization conversion integrator 60 composed of PBS and a half-wave plate. Thereafter, the light is passed through the lens 63 and is decomposed into three primary colors of R, G, and B by two dichroic mirrors 70. Each of the decomposed three primary colors is passed through the mirror 71 and the like and is individually lead to an optical switch including the polarizing plate 81, the liquid crystal panel 80, the dust-proof window 82, and the polarizing plate 81. Furthermore, each light is passed through the half-wave plate 83 and is combined by the cross dichroic prism 84. The combined light is lead to the projection lens system 90 and is enlarged and projected so that an image is displayed on a front screen.

At least one type of the ultraviolet cut filter 54, the flyeye lens 61, the lens 63, the dichroic mirror 70, the polarization conversion integrator 60, a holding plate of a polarizer in the polarizing plate 81, the transparent substrate constituting the liquid crystal panel 80, and the dust-proof window 82 of this liquid crystal projector is formed from a spinel substrate. Consequently, the heat is dissipated efficiently by the spinel substrate having high thermal conductivity.

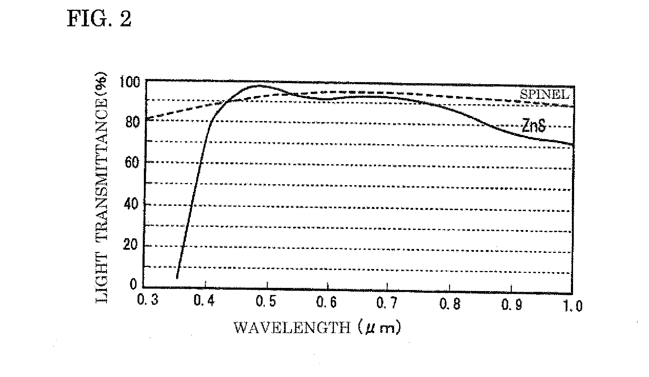

Fig. 2 shows a graph of the light transmittance in a visible light region of a ZnS substrate and a spinel substrate, which are transparent substrates formed from a transparent highly-thermal-conductive cubic polycrystal, for an optical engine of a rear-projection television, according to the present invention. Very good optical transparency is shown in a region of 0.4 µm to 1 µm which is so-called visible light. In particular, the spinel substrate exhibits good optical transparency even in a short wavelength region (0.4 µm or less).

The light source for the optical engine of the rear-projection television emits visible light and, at the same time, also emits invisible light having wavelengths in the infrared region. These infrared rays are sometimes called heat rays and are easily absorbed by substances to cause heat generation. In this region as well, the substrate, according to the present invention, formed from the transparent highly-thermal-conductive cubic polycrystal has excellent optical transparency. Therefore, the light and the like emitted from the light source are hardly absorbed, and the temperature hardly increases. If a temperature increase of the transparent substrate is at a low level, the heat generated on the basis of the absorption of the light and the like by an optical on-off element portion (a transparent element substrate provided with picture electrodes, wirings, oriented films, and the like formed from transparent conductors, a substrate opposed thereto, and an optical on-off element sandwiched by the two substrates) which is formed in the original image forming panel and which is sandwiched by one or two transparent substrates (each, LCOS type and DLP type, LCD type) can be absorbed and, thereby, an excessive temperature increase of the optical on-off element portion can be prevented. Furthermore, the thermal conductivity of ZnS, which is an example of a transparent substrate for an optical engine of a rear-projection television, the transparent substrate being formed from a transparent highly-thermal-conductive cubic polycrystal, is about 21 W/mK and is much larger than that of the quartz glass. Therefore, the above-described absorbed heat can be dissipated to the outside promptly and, from this point of view as well, an excessive temperature increase can be prevented.

In particular, since the light from the light source is also partly interrupted by using polarization to form an image, the amount of heat generation is large, and the temperature tend to increase. The orientation characteristics of the liquid crystal are hindered by the temperature increase. Therefore, cooling is indispensable. Consequently, the transparent substrate is required to have characteristics as a heat dissipating member, and a transparent substrate having good thermal conductivity and exhibiting a small temperature increase based on the absorption of the light and the like from the light source is selected.
The transparent substrate for an optical engine of a rear-projection television according to the present invention, the transparent substrate being formed from a transparent highly-thermal-conductive cubic polycrystal, is a substrate suitable for the above-described uses.

The transparent substrate for an optical engine of a rear-projection television, the transparent substrate being formed from a transparent highly-thermal-conductive cubic polycrystal, used for the present invention can be obtained by the following means.
A high purity material is made into a compact. Spinel, YAG, MgO, ALON, and the like can be obtained by a powder sintering method. A known high-pressure synthesis method or CVD (chemical vapor deposition method) may be used for diamond. As for ZnS, it is favorable that a Zn powder and H₂S are employed as raw materials and CVD (chemical vapor deposition method) is used. The resulting compact is made into a transparent polycrystal by HIP (hot isostatic press).

The above-described transparent substrate for an optical engine of a rear-projection television, the transparent substrate being formed from a transparent highly-thermal-conductive cubic polycrystal, can be used without being further treated. However, it is favorable that the surface is subjected to a coating treatment in order to improve the optical transparency and improve the surface stability. The material for the coating is not specifically limited insofar as the material has an affinity for the transparent substrate formed from the transparent highly-thermal-conductive cubic polycrystal and takes full advantage of the characteristics of the transparent substrate, which serves as the raw material, formed from the transparent highly-thermal-conductive cubic polycrystal regarding the transparency, the hardness, and the thermal conductivity. The coating layer may be used as a single layer. However, it is preferable that a multilayer coating layer is formed.

In the case where the coating layer is made into a multilayer, preferably, metal oxides, e.g., SiO₂, TiO₂, Al₂O₃, Y₂O₃, Ta₂O₅, ZrO₂, Ta₂O₅, and LaO₃; metal fluorides, e.g., MgF₂, YF₃, LaF₃, CeF₃, and BaF₂; and other zinc compounds can be used.
These layers may be used by stacking 2 layers to about 20 layers. It is favorable that the thickness of the above-described coating layer is up to 5,000 nm at a maximum even when a multilayer configuration is adopted.
It is favorable that a physical vapor deposition method (PVD method) is used for the formation of the above-described coating layer. This can be conducted by a known method, e.g., a sputtering method, an ion plating method, or a vacuum deposition method. In particular, when ion assisted deposition and plasma assisted deposition are used in combination, the film performance is improved.
The examples primarily related to the materials for the transparent substrate will be described below. However, the present invention is not limited to the examples.

### EXAMPLE 1

The present example relates to production of a transparent ZnS polycrystal substrate and formation of two antireflection coating layers on this transparent substrate.
High purity ZnS bulk was produced from Zn having a purity of 99.9% or more and H₂S by using a CVD apparatus. Regarding the reaction condition of CVD, the substrate temperature was 700°C, the crucible temperature was 700°C, and the pressure in a furnace was 10 Torr. The reaction was conducted in an argon gas atmosphere. The resulting ZnS bulk took on translucent yellow. This bulk was made into a polycrystal by using hot isostatic press (HIP) under the condition of a temperature of 1,000°C, a pressure of 2,000 kg/cm², and an argon atmosphere. The resulting ZnS polycrystal was achromatic and transparent. This ZnS polycrystal was worked into a plate having a thickness of 1 mm, and the spectral transmission factor was measured. The average transmittance over the wavelength of 400 nm to 800 nm was 73%.

In order to improve the light transmittance of the above-described tabular ZnS polycrystal, antireflection coating having a total thickness of 0.3 µm was applied by using MgF₂ as a low refractive index material and Al₂O₃ as a high refractive index material, and the spectral transmission factor was measured. The average transmittance over the wavelength of 400 nm to 800 nm became 90%. The resulting transparent plate was incorporated as a window member of an original image forming panel of an optical engine of a rear-projection television, and an image evaluation was conducted. Regarding the image projected on the screen of the television, there was no unevenness of illuminance in spite of the fact that it was viewed from the back of the light source, the result was equivalent to that in the case where quartz glass was used and, therefore, the evaluation result was good.

### EXAMPLE 2

The present example relates to production of a transparent spinel polycrystal substrate and formation of one or two antireflection coating layers on this transparent substrate.
A spinel (MgO ·Al₂O₃) powder having a purity of 99.9% or more was preformed at a pressure of 1,500 kg/cm². The resulting compact was put into a graphite container, and pressure sintering was conducted in a vacuum at a temperature of 1,500°C and a pressure of 350 kg/cm². The resulting sintered spinel was made into a polycrystal by using HIP under the condition of a temperature of 1,650°C, a pressure of 2,000 kg/cm², and an argon atmosphere. The resulting spinel polycrystal was achromatic and transparent. This spinel polycrystal was worked into a plate having a thickness of 1 mm, and the spectral transmission factor was measured. The average transmittance over the wavelength of 400 nm to 800 nm was 84%.

In order to improve the light transmittance of the above-described tabular spinel polycrystal, antireflection coating having a film thickness of 50 nm to 150 nm was applied by using MgF₂ as a low refractive index material. The method of forming the film of the MgF₂ coating layer is PVD, resistance heating, or electron beam gun.

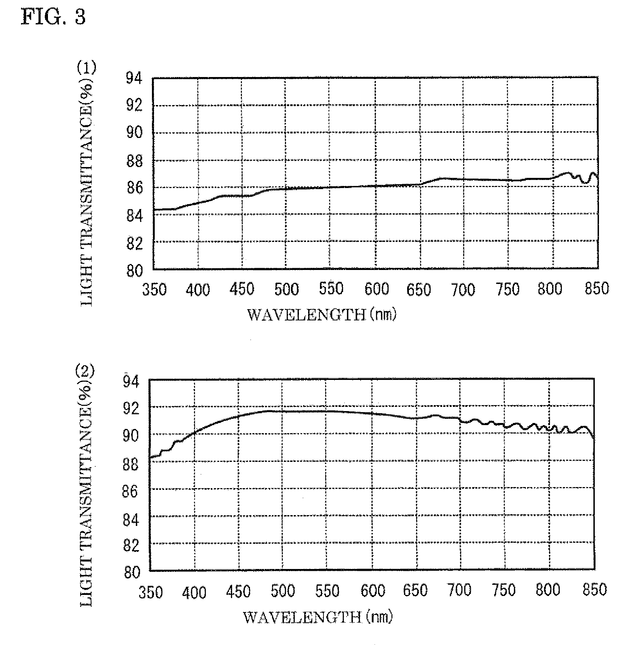

The tabular spinel polycrystal provided with the antireflection coating layer was irradiated with unpolarized white light in air from a direction perpendicular to the plate surface (vertically) and the spectral transmission factor was measured. The measurement results are shown in Fig. 3. In Fig. 3, (1) shows the measurement results of the spinel substrate before formation of the antireflection coating, and (2) shows the measurement results of the substrate after the formation. As is clear from Fig. 3, the average transmittance over the wavelength of 400 nm to 800 nm became 91%.

Antireflection coating having a total thickness of 300 nm was applied by using MgF₂ as a low refractive index material and Al₂O₃ as a high refractive index material, and the spectral transmission factor was measured. The average transmittance over the wavelength of 400 nm to 800 nm became 93%. These plates were incorporated as window members of original image forming panels of optical engines of rear-projection televisions, and image evaluations were conducted. Regarding the images projected on the screens of the televisions, there was no unevenness of illuminance in spite of the fact that they were viewed from the back of the light source, the results were equivalent to that in the case where quartz glass was used and, therefore, the evaluation results were good.

### EXAMPLE 3

The present example relates to production of a transparent YAG polycrystal substrate and formation of two antireflection coating layers on this transparent substrate.
A YAG (3Y₂O₃ ·5Al₂O₃) powder having a purity of 99.9% or more was preformed at a pressure of 1,500 kg/cm². The resulting compact was put into an alumina container, and sintering was conducted in a vacuum at a temperature of 1,500°C. The resulting YAG polycrystal was achromatic and transparent. This YAG polycrystal was worked into a plate having a thickness of 1 mm, and the spectral transmission factor was measured. The average transmittance over the wavelength of 400 nm to 800 nm was 83%.

In order to improve the light transmittance of the above-described tabular YAG polycrystal, antireflection coating having a total thickness of 300 nm was applied by using MgF₂ as a low refractive index material and Al₂O₃ as a high refractive index material, and the spectral transmission factor was measured. The average transmittance over the wavelength of 400 nm to 800 nm became 92%. This plate was incorporated as a window member of an original image forming panel of an optical engine of a rear-projection television, and an image evaluation was conducted. Regarding the image projected on the screen of the television, there was no unevenness of illuminance in spite of the fact that it was viewed from the back of the light source, the result was equivalent to that in the case where quartz glass was used and, therefore, the evaluation result was good.

### EXAMPLE 4

The present example relates to production of a transparent MgO polycrystal substrate and formation of two antireflection coating layers on this transparent substrate.
A MgO powder having a purity of 99.9% or more was preformed at a pressure of 1,500 kg/cm². The resulting compact was put into a graphite container, and pressure sintering was conducted in a vacuum at a temperature of 1,500°C and a pressure of 350 kg/cm². The resulting sintered MgO was made into a polycrystal by using HIP under the condition of a temperature of 1,650°C, a pressure of 2,000 kg/cm², and an argon atmosphere. The resulting MgO polycrystal was achromatic and transparent. This MgO polycrystal was worked into a plate having a thickness of 1 mm, and the spectral transmission factor was measured. The average transmittance over the wavelength of 400 nm to 800 nm was 84%.

In order to improve the light transmittance of the above-described tabular MgO polycrystal, antireflection coating having a total thickness of 300 nm was applied by using MgF₂ as a low refractive index material and Al₂O₃ as a high refractive index material, and the spectral transmission factor was measured. The average transmittance over the wavelength of 400 nm to 800 nm became 93%. This plate was incorporated as a window member of an original image forming panel of an optical engine of a rear-projection television, and an image evaluation was conducted. Regarding the image projected on the screen of the television, there was no unevenness of illuminance in spite of the fact that it was viewed from the back of the light source, the result was equivalent to that in the case where quartz glass was used and, therefore, the evaluation result was good.

### (Second embodiment)

The present embodiment relates to formation of all transparent substrates from spinel and formation of at least two antireflection coating layers.

### EXAMPLE 5

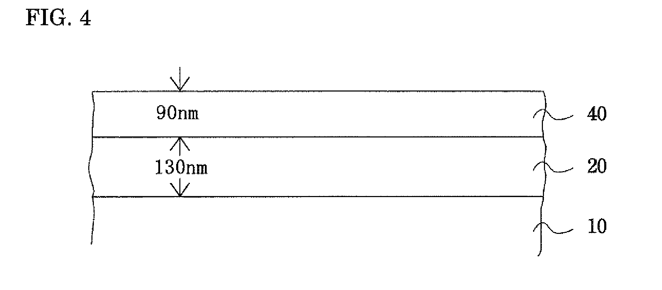

Example 5 relates to formation of two antireflection coating layers.
A first coating layer is formed by vapor deposition of Y₂O₃ serving as a high refractive index material (n = 1.7 to 1.8) and having a thickness of 140 nm, and a second coating layer is formed by vapor deposition of MgF₂ serving as a low refractive index material (n = 1.4 to 1.5) and having a thickness of 90 nm. Fig. 4 conceptually shows the state of lamination of these antireflection coatings. In Fig. 4, reference numeral 10 denotes a spinel thin plate, reference numeral 20 denotes the first coating layer formed from Y₂O₃, and reference numeral 40 denotes the second coating layer formed from MgF₂. The film formation condition of MgF₂ is the same as that in Example 2. The film formation method of Y₂O₃ is PVD or electron beam gun.
The plate thickness of spinel is 1 mm.

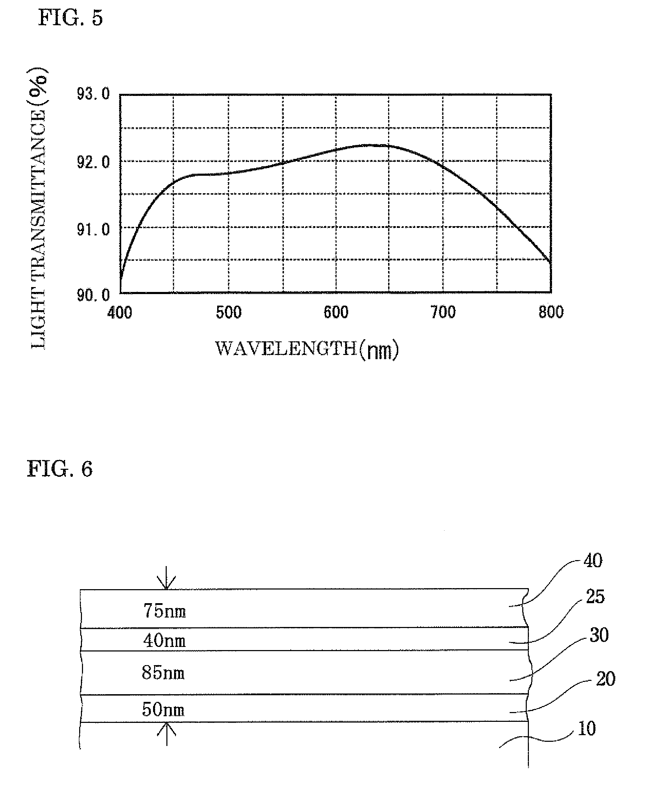

The spectral transmission factor of the tabular spinel polycrystal provided with the antireflection coating was measured. The measurement results are shown in Fig. 5. As is clear from Fig. 5, the average transmittance over the wavelength of 400 nm to 800 nm became 91.5%.

### EXAMPLE 6

Example 6 relates to formation of four antireflection coating layers.
A first coating layer is formed by vapor deposition of Y₂O₃ exhibiting a medium refractive index (n = 1. 7 to 1. 8) and having a thickness of 50 nm, a second coating layer is formed by vapor deposition of ZnS exhibiting the highest refractive index (n = 2.0 to 2.2) and having a thickness of 85 nm, a third coating layer is formed by vapor deposition of Y₂O₃ exhibiting the medium refractive index (n = 1.7 to 1.8) and having a thickness of 40 nm again, and a fourth coating layer is formed by vapor deposition of MgF₂ exhibiting the lowest refractive index (n = 1.4 to 1.5) and having a thickness of 75 nm. Fig. 6 conceptually shows the state of lamination of these layers. In Fig. 6, reference numeral 10 denotes a spinel thin plate, reference numeral 20 denotes the first coating layer formed from Y₂O₃, reference numeral 30 denotes the second coating layer formed from ZnS, reference numeral 25 denotes the third coating layer formed from Y₂O₃, and reference numeral 40 denotes the fourth coating layer formed from MgF₂. The film formation condition of MgF₂ is the same as that in Example 2. The film formation method of ZnS is PVD or resistance heating.

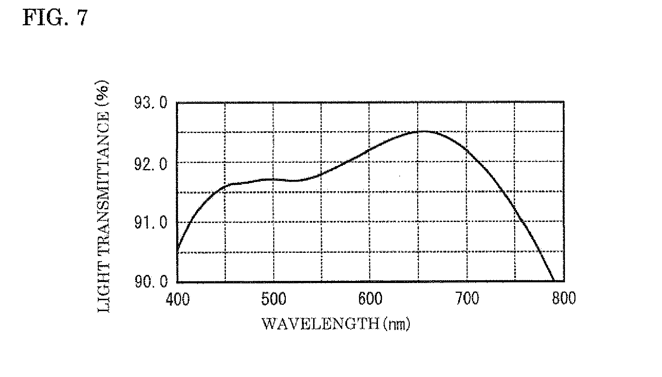

The spectral transmission factor of the tabular spinel polycrystal provided with the antireflection coating was measured. The measurement results are shown in Fig. 7. As is clear from Fig. 7, the average transmittance over the wavelength of 400 nm to 800 nm became 91.5%.

## Claims

1. A transparent substrate for an optical engine of a rear-projection television receiver, the transparent substrate **characterized by** comprising a transparent highly-thermal-conductive cubic polycrystal plate.

2. The transparent substrate for an optical engine of a rear-projection television receiver according to Claim 1, the transparent substrate **characterized in that** a coating layer is disposed on the surface.

3. The transparent substrate for an optical engine of a rear-projection television receiver according to Claim 2, the transparent substrate **characterized in that** the coating layer comprises a single layer or a multilayer and comprises a layer in which at least one type of layer selected from metal fluorides and metal oxides is used alone or in combination.

4. The transparent substrate for an optical engine of a rear-projection television receiver according to Claim 1 or Claim 2, the transparent substrate **characterized in that** the transparent highly-thermal-conductive cubic polycrystal is selected from the group consisting of transparent ZnS, spinel (MgO nAl₂O₃; n = 1 to 3), YAG (3Y₂O₃ ·5Al₂O₃), MgO, ALON (5AlN ·9Al₂O₃), Y₂O₃, and diamond.

5. The transparent substrate for an optical engine of a rear-projection television receiver according to any one of Claim 1 to Claim 3, the transparent substrate **characterized in that** the transparent highly-thermal-conductive cubic polycrystal comprises spinel (MgO nAl₂O₃; n = 1 to 3).

6. The transparent substrate for an optical engine of a rear-projection television receiver according to any one of Claim 1 to Claim 3, the transparent substrate **characterized in that** the transparent highly-thermal- conductive cubic polycrystal comprises YAG (3Y₂O₃ ·5Al₂O₃).

7. The transparent substrate for an optical engine of a rear-projection television receiver according to any one of Claim 1 to Claim 3, the transparent substrate **characterized in that** the transparent highly-thermal-conductive cubic polycrystal comprises MgO.

8. The transparent substrate for an optical engine of a rear-projection television receiver according to any one of Claim 1 to Claim 3, the transparent substrate **characterized in that** the transparent highly-thermal-conductive cubic polycrystal comprises ZnS.

9. The transparent substrate for an optical engine of a rear-projection television receiver according to any one of Claim 1 to Claim 8, the transparent substrate **characterized by** comprising a substrate of a type including an optical on-off element.

10. A rear-projection television receiver **characterized by** comprising the transparent substrate for an optical engine of a rear-projection television according to any one of Claim 1 to Claim 9.

11. A transparent spinel substrate **characterized by** comprising a coating layer on at least one surface, wherein in order to prevent reflection, the coating layer has
a first coating layer disposed on a surface of the spinel and formed from any one of HfO₂, Al₂O₃, Y₂O₃, ZrO₂, TiO₂, Ta₂O₅, La₂O₃, and LaF₃ and
a second coating layer disposed on a surface of the first coating layer and formed from any one of MgF₂, SiO₂, and LaF₃ (limited to the case where the first coating layer is not formed from LaF₃.

12. A transparent spinel substrate **characterized by** comprising a coating layer on at least one surface, wherein in order to prevent reflection, the coating layer has
a first coating layer disposed on a surface of the spinel and formed from any one of HfO₂, Al₂O₃, Y₂O₃, TiO₂, Ta₂O₅, La₂O₃, and LaF₃,
a second coating layer disposed on a surface of the first coating layer and formed from any one of TiO₂, Ta₂O₅, Nb₂O₅, ZnS, ZnSe, ZrO₂, and LaF₃, the material being different from the material for the first coating layer,
a third layer disposed on a surface of the second coating layer and formed from any one of HfO₂, Al₂O₃, Y₂O₃, TiO₂, Ta₂O₅, La₂O₃, and LaF₃, the material being different from the material for the second coating layer, and
a fourth coating layer disposed on a surface of the third coating layer and formed from any one of MgF₂, SiO₂, and LaF₃, the material being different from the material for the third coating layer.

13. The transparent spinel substrate according to Claim 11 or Claim 12, **characterized in that** when the molecular formula of spinel of the transparent spinel substrate is expressed by MgO nAl₂O₃, n is 1.08 or more, and 1.09 or less.

14. The transparent spinel substrate according to any one of Claim 11 to Claim 13, **characterized in that** the transparent spinel substrate is used for a rear-projection television receiver or is used for a liquid crystal image projector.

15. A rear-projection television receiver or a liquid crystal image projector, **characterized by** comprising the transparent spinel substrate according to any one of Claim 11 to Claim 13.
